# EUROPÄISCHE PATENTSCHRIFT

(11) **EP 1 118 844 B1**
(45) Veröffentlichungstag und Bekanntmachung des Hinweises auf die Patenterteilung: **26.10.2005**
(21) Anmeldenummer: 01200145.9
(22) Anmeldetag: 16.01.2001
(51) Int. Cl.: G01G 23/06

(54) **Abstützvorrichtung für eine Wägezelle und Waage mit einer Abstützvorrichtung**
Supporting device for a load cell and a weighing apparatus with a supporting device
Dispositif de support pour une cellule de pesée et balance avec un dispositif de support

(30) Priorität: 19.01.2000 DE 10001896
(43) Veröffentlichungstag der Anmeldung: 25.07.2001
(73) Patentinhaber: Mettler-Toledo GmbH, 8606 Greifensee (CH)
(72) Erfinder: Lüchinger, Paul, 8610 Uster (CH); Fringell, Eduard, 8608 Bubikon (CH); Zeiss, Siegfried, 8630 Wolfhausen (CH)

(56) Entgegenhaltungen:
- CH-A- 680 877
- DE-A- 4 129 398
- US-A- 4 298 081

## Beschreibung

Die Erfindung liegt auf dem Gebiet der Schocksicherung für empfindliche Geräte und betrifft eine Abstützvorrichtung für eine Wägezelle gemäss Oberbegriff des Anspruchs 1 und eine Waage mit einer Abstützvorrichtung gemäss Oberbegriff des Anspruchs 8.

Messapparate mit einer Präzisionsmechanik, wie insbesondere Laborwaagen hoher Auflösung mit ihren Hebeln, Biegelagern, Parallelführungen usw., können beschädigt werden, wenn sie beim Umplatzieren oder Transportieren Schlägen ausgesetzt sind, wie sie beim unsanften Abstellen, Anstossen oder gar Fallenlassen vorkommen können. Mit besonderen Massnahmen zur Schocksicherung wird versucht, übermässige Belastungen so abzufangen, dass die empfindlichen Teile des Apparats keinen Schaden nehmen. Bei den genannten Waagen ist die Wägezelle samt der Krafteinleitungsvorrichtung besonders gefährdet, namentlich in Bezug auf Stösse in lotrechter Richtung, in welcher im Betrieb ja auch die Kräfte zu messen sind. Die häufigste Störung in dieser Richtung resultiert aus unsanftem Abstellen nach einem Ortswechsel oder einem Wegheben zur Reinigung. Eine vordringliche Massnahme für Waagen besteht daher darin, die Stossbelastungen auf die Wägezelle in lotrechter Richtung abzufangen. Auch Stösse in entgegengesetzter Richtung sind kritisch und können zum Beispiel vorkommen, wenn die Waage auf dem Kopf transportiert oder zur Reinigung auf den Kopf gestellt wird.

Eine Möglichkeit, Schläge auf die Wägezelle zu lindern ist in der CH-A-680877 offenbart. Die dort beschriebene Waage benützt eine Printplatte, also ein Bauteil der in der Waage enthaltenen Elektronik, als federnde Abstützung für die Wägezelle. Eine solche Ausgestaltung lässt eine kompakte Bauweise zu und gibt eine zweckmässige Abfederung allfälliger Schockbelastungen. Das System ist aber trotz inhärenter Dämpfung der Platte schwingungsanfällig. So kann die Wägezelle beispielsweise durch Gebäudevibrationen in Schwingungen versetzt werden, was bei hochauflösenden Waagen lang dauernde Filterungsvorgänge nötig macht oder/und zu unstabilen Anzeigen führt.

Es besteht daher die Aufgabe, eine in lotrechter Richtung - nach oben wie nach unten - wirksame Schockabsorbierung für eine Wägezelle zur Verfügung zu stellen, welche die vorgenannten Nachteile überwindet und gleichwohl eine kompakte, niedere Bauweise zulässt. Sie wird durch eine Abstützvorrichtung mit den kennzeichnenden Merkmalen des Anspruchs 1 beziehungsweise durch eine Waage gelöst, deren Gehäuse eine solche Abstützvorrichtung aufnimmt.

Die erfindungsgemässe Abstützung der Wägezellen durch eine oder mehrere Stütze(n) auf eine gegen oben vorgespannte Feder ergibt eine quasi starre Auflagefläche für die Wägezelle solange die Kraft nach unten auf die Stütze die Vorspannkraft der Feder nicht überschreitet. Die Anlenkung der einzelnen Stütze(n) bewirkt, dass beim Überschreiten der Vorspannkraft, also dem federnden Abfangen des Schocks, die Wägezelle nahezu parallel geführt wird. Es kommt so nicht zu Verkantungen und folglich wird auch seitlich nur wenig Spiel benötigt, was wiederum eine kompakte Bauweise ermöglicht. Als weiterer Vorteil ergibt sich, dass die Wägezelle nach Nachlassen der Kräfte wieder exakt in ihre ursprüngliche Position zurückkehrt. Des weiteren kann die Wägezelle auch nach oben von der Feder abheben, so dass sich ein lotrecht nach oben gerichteter Stoss ebenfalls abfangen lässt.

Durch das blattfederartige Ausgestalten der Lenker als Lenkfedern lassen sich die Stösse in vertikaler Richtung nach oben zudem abfedern, ohne zusätzliche Bauteile verwenden und ohne die Bauhöhe erweitern zu müssen.

Eine besonders einfache und zudem raumsparende Form ergibt sich durch Ausgestaltung der vorgespannten Feder als Blattfeder. Die Abstützung jeder die Wägezelle tragenden Stütze ist auf Blattfedern ebenfalls problemlos möglich, insbesondere wenn für die Stütze ein Bolzen mit zwei Abschnitten unterschiedlicher Dicke verwendet wird, dessen Schulter auf der Blattfeder aufliegt und dessen schlankerer Abschnitt durch die Feder hindurch am Lenker befestigt ist. Bevorzugt werden zudem die Blattfedern und die Lenkfedern paarweise parallel angelegt, was eine sehr niedrige Bauhöhe ergibt.

Die Ausgestaltung der Lenker als Blattfedern erlaubt es, alle aus einem einzigen Stanzteil zu formen. Durch entsprechende Wahl der Verbiegung und der Dimensionen, insbesondere der Dicke und der Breite der Blätter, lässt sich die Federkraft auf einfache Weise den Gegebenheiten, namentlich dem Gewicht der Wägezelle und der damit verbundenen Teile, und Erfordernissen, namentlich den zu erwartenden Schlägen, anpassen. Für die Gestaltung der vorgespannten Federn gilt sinngemäss das Gleiche.

Die feste Auflage, an welcher die Abstützvorrichtung befestigt ist, wird bei einer Waage durch das feststehende Gehäuse gebildet, das die Wägezelle umschliesst. Bei hochauflösenden Waagen ist oft der Raum innerhalb des Gehäuses unterteilt, um die Wägezelle vor Einflüssen anderer Bauteile abzuschirmen. So ist es zum Beispiel von Vorteil, das Volumen um die Zelle klein zu halten. In einer bevorzugten Ausführungsform einer Waage mit einer Abstützungsvorrichtung für die Wägezelle verläuft daher der feststehende Gehäuseboden in verschiedenen Bereichen auf unterschiedlichem Niveau. Dadurch entsteht ein Hohlraum unterhalb der Wägezelle, welcher seinerseits mit einer Abdeckplatte abgeschlossen sein kann. Dieser Hohlraum ist geeignet, nebst anderen Bauteilen der Waage die Federn und die Lenker aufzunehmen. Zu diesem Zweck weist der feststehende, auf höherem Niveau verlaufende Gehäuseboden Löcher auf, durch welche die Stützen der Abstützvorrichtung in den Hohlraum ragen. Die Federn, bevorzugt Blattfedern, und Lenker, bevorzugt Lenkfedern, liegen ebenfalls in diesem Hohlraum und sind von unten am Gehäuseboden befestigt.

Der feststehende Boden kann aber auch gerade verlaufen und Feder und Lenker darüber liegen. Mit Vorteil werden dann verschliessbare Löcher im Bereich der Anlenkung der Stützen vorgesehen, damit ein Befestigen und Lösen der Verbindung zwischen Stütze und Lenker möglich ist.

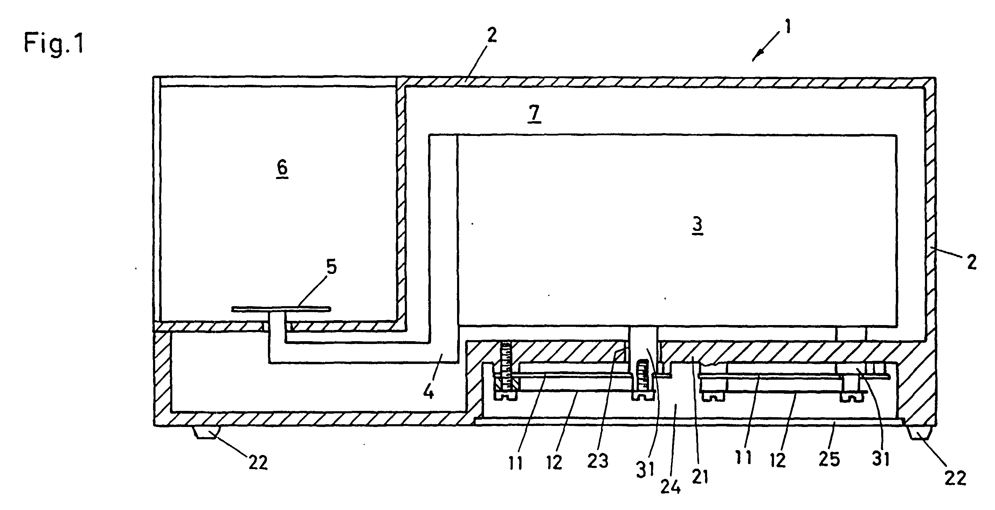

Die Erfindung ist nachstehend unter Bezugnahme auf die Figuren 1 bis 7 anhand einer bevorzugten Ausführungsform für eine Mikrowaage und eine Präzisionswaage illustriert. Es versteht sich aber von selbst, dass die Erfindung nicht auf diese Form beschränkt ist, sondern die im Rahmen der Gesamtoffenbarung erkenntlichen Varianten mit einschliesst.

Die Figuren zeigen:
- Fig. 1:: Schematischer Schnitt durch eine Mikrowaage
- Fig. 2:: Vergrösserung des Schnitts aus Fig. 1 im Bereich einer Stütze der Wägezelle
- Fig. 3:: Schnitt von Fig. 2 mit der Wägezelle in nach unten ausgelenkter Lage
- Fig. 4:: Schnitt von Fig. 2 mit der Wägezelle in nach oben ausgelenkter Lage
- Fig. 5:: Ansicht eines Stanzstücks mit drei Blattfedern
- Fig. 6:: Ansicht eines Stanzstücks mit drei Lenkfedern
- Fig. 7:: Schematischer Schnitt durch eine oberschalige Präzisionswaage

Der schematische Schnitt durch eine Mikrowaage 1 in der Figur 1 zeigt ein feststehendes Gehäuse 2, das einen Raum 7 umschliesst, der die Wägezelle 3 samt dem Lastaufnehmer 4 enthält. Letzterer ragt in einen Wägeraum 6 und trägt dort eine Waagschale 5. Das feststehende Gehäuse 2 liegt mit Füssen 22 auf einer festen, nicht dargestellten Unterlage wie etwa einem Wägetisch auf. Im Bereich der Wägezelle 3 verläuft der hier verstärkte Gehäuseboden 21 auf höherem Niveau als in anderen Bereichen, wie etwa unter dem Wägeraum 6. Die Details der Wägezelle 3 mit ihrer Wägemechanik und dem Magnetsystem sind hier nicht von Belang und können gegebenenfalls anderen Quellen entnommen werden, wie etwa den US Patentschriften 3,786,884 und 4,489,800. An der Wägezelle 3 sind Stützen 31, hier in Form von Bolzen, befestigt, die durch Durchgangslöcher 23 im Gehäuseboden ragen und je auf einer vorgespannten Feder, hier einer Blattfeder 11 aufliegen sowie mit einem Lenker in Form einer Lenkfeder 12 verbunden sind. Im vorliegenden Beispiel sind drei Stützen 31 vorgesehen, wovon zwei zur Darstellung kommen, die vordere im Schnitt, die entferntere der zwei hinteren in der Ansicht, die nähere ist weggeschnitten. Durch den Verlauf des Gehäusebodens 21 auf höherem Niveau entsteht ein Hohlraum 24, der durch eine zusätzliche Bodenplatte 25 abgeschlossen ist.

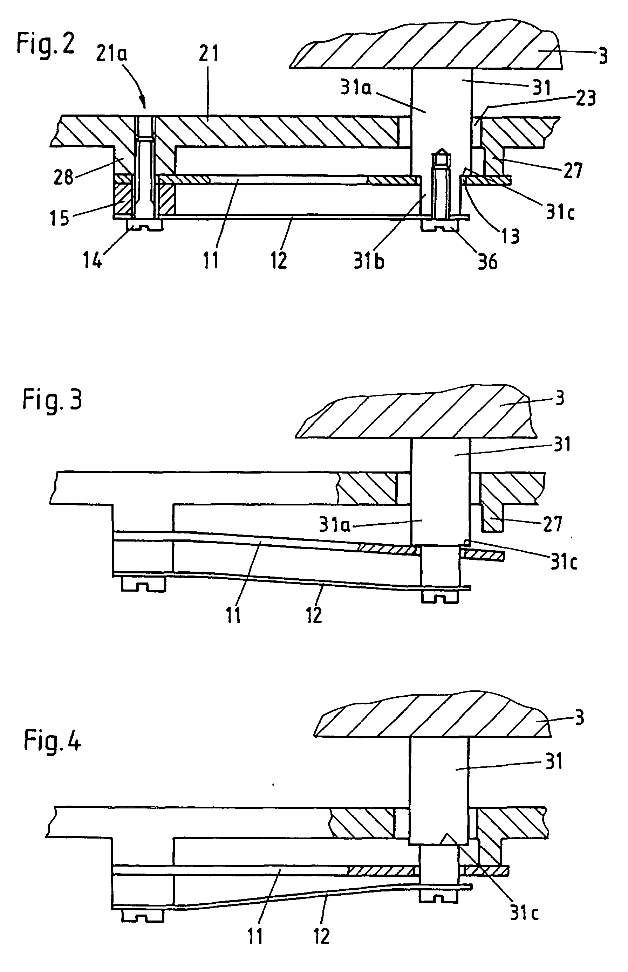

Die Figur 2 zeigt die vordere Stütze und die Federn grösser und mit mehr Details. Man erkennt wiederum die bolzenförmige Stütze 31, die aus der Wägezelle 3 herausragt. Sie weist zwei Abschnitte auf. Der obere, dickere Abschnitt 31a bildet am Übergang zum schlankeren Abschnitt 31b eine Schulter 31c, die auf der Blattfeder 11 aufliegt. Der schlankere Abschnitt 31b der Stütze 31 ragt durch eine Bohrung 13 in der Blattfeder 11 hindurch nach unten über diese hinaus. Die Stütze 31 reicht durch ein Durchgangsloch 23 im Gehäuseboden 21 hindurch ohne diesen zu berühren. Am unteren Ende ist die Stütze 31 mittels einer Schraube 36 mit der Lenkfeder 12 verschraubt. Der Gehäuseboden 21 weist unmittelbar neben dem Durchgangsloch 23 eine Erhebung 27 in Form eines Stegs auf, welche als Anschlag für die Blattfeder 11 dient - der Anschlag kann auch auf andere Weise als hier gezeichnet ausgestaltet sein. Am anderen Ende ist die Blattfeder 11 fest mit dem Gehäuseboden 21 verbunden, eben so die Lenkfeder 12. Hier sind Lenker und Feder in der bevorzugten Ausführungsform als parallel verlaufendes Paar von Blattfedern gezeigt, die an derselben Stelle 21a am Gehäuseboden 21 befestigt sind. Der Gehäuseboden weist dort einen Flansch 28 von etwa gleicher Höhe wie der Steg 27 auf. Die daran befestigte Blattfeder 11 kommt in ihrer - vorgespannten - Ruhestellung dadurch etwa horizontal und parallel zum Gehäuseunterboden zu liegen. Eine Büchse 15 mit einer Höhe, die der Länge des schlankeren Abschnitts 31b abzüglich der Dicke der Blattfeder 11 entspricht, dient als Abstandshalter für die Lenkfeder 12, die hier mittels der Schraube 14 fest mit der Blattfeder 11 und dem Gehäuseboden 21 über dessen Flansch 28 verbunden ist. Dadurch kommt auch die Lenkfeder 12 etwa horizontal und parallel zum Gehäuseunterboden 21 zu liegen.

Die Lenkfeder 12 ist ebenfalls vorgespannt, aber nach unten. Sie vergrössert damit die Kraft, mit welcher die Stütze 31 auf der Blattfeder 11 aufliegt. Diese Kraft ist im übrigen durch das Eigengewicht der Wägezelle 3 und der von ihr getragenen Teile sowie der aufgelegten Last bestimmt. Die Vorspannung auf der Blattfeder 11 muss mindestens so gross sein, dass sie unter der Kraft, mit der die Stütze 31 auf der Blattfeder 11 aufliegt, nicht vom Anschlag am Steg 27 abhebt.

Die Figur 3 zeigt den nämlichen Teil der Abstützvorrichtung wie in Figur 2 - diesmal etwas anders angeschnitten - im Zustand der Abfederung eines Stosses nach unten, wie er zum Beispiel beim zu harten Abstellen der Waage resultiert. Unter der Wirkung der zusätzlichen Kräfte (Trägheit der Wägezelle) biegt sich die Blattfeder 11 und löst sich vom Steg 27. Unter dem Einfluss der Lenkfeder 12, wird dabei die Stütze 31 in nahezu axialer Richtung bewegt, ungeachtet der Grösse der seitlich auf die Stütze 31 und die Wägezelle 3 wirkenden Kräfte, zum Beispiel auch durch das einseitige Aufliegen der Schulter 31c des dickeren Abschnitts 31a der Stütze 31 auf der Blattfeder 11. Mit dem Nachlassen der zusätzlichen Kräfte kehrt die Blattfeder 11 in ihre ursprüngliche Lage zurück. Dabei sorgt die Lenkfeder 12 für die genaue Rückkehr der Stütze 31 in die Ausgangsposition.

Aus der Figur 4 ist der Zustand ersichtlich, wie er bei einem Stoss in der entgegengesetzten Richtung zu jenem in Figur 3 entsteht. Dieser Zustand ist in Normallage eher selten, weil ein Abruptes Abbremsen einer Bewegung nach oben kaum vorkommt. Hingegen kann er vorkommen, wenn die Waage kopfüber gedreht wird - die Figur 4 zeigt gleichwohl die Normallage. Die Vorspannung der Lenkfeder 12 sollte so gross sein, dass bei kopfüber liegender Waage die Schulter 31c der Stütze 31 unter der Wirkung der Schwerkraft auf die Wägezelle 3 nicht von der Blattfeder 11 abhebt. Zusätzliche Kräfte infolge von Schocks federt die Lenkfeder 12 ab. Dabei stellt diese wiederum sicher, dass sich die Stütze 31 im wesentlichen nur axial verschiebt und in die Ursprungsposition zurückkehrt.

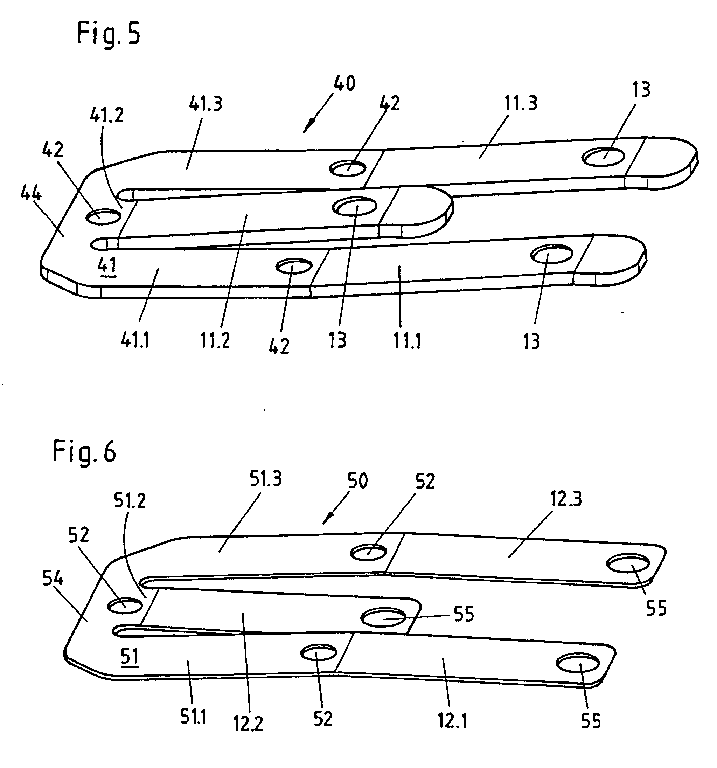

Die Figur 5 zeigt eine bevorzugte Ausführungsform eines Stanzteils 40 der Abstützvorrichtung mit drei parallel liegenden Zungen, welche drei Blattfedern 11 (11.1 bis 11.3) bilden, und die über ein U-förmiges Befestigungsteil 41 miteinander verbunden sind. Der im wesentlichen ebene, E-förmige Abschnitt 41 dient der beabstandeten Befestigung an der festen Auflage. Hierfür sind mindestens die drei Schraubenlöcher 42 ausgestanzt. Die unterschiedlichen Längen der Schenkel 41.1, 41.2 und 41.3 von der verbindenden Basis 44 bis zu den Schraubenlöchern 42 ergeben sich durch die verschiedenen Positionen, an denen die Blattfedern 11 an der festen Auflage befestigt sein müssen. Im Bereich des Schraubenlochs 42 beginnt die eigentliche Blattfeder 11.n die sich bis an das Ende der jeweiligen Zunge erstreckt. Anschliessend an das jeweilige Schraubenloch 42 ist das Stanzteil 40 nach oben abgekröpft und entfaltet dadurch im eingespannten Zustand seine vorgespannte Federwirkung. Gegen das äussere Ende der Zunge weist diese eine Bohrung 13 auf, durch welche der schlankere Abschnitt 31b (Fig. 3) einer bolzenförmigen Stütze 31 reicht, und an deren Rand die Schulter 31c der Stütze 31 aufliegen kann.

Die Figur 6 zeigt eine bevorzugte Ausführungsform eines Stanzteils 50 der Abstützvorrichtung mit drei parallel liegenden Zungen, welche drei Lenkfedern 12 (12.1 bis 12.3) bilden, und die über ein U-förmiges Befestigungsteil 51 miteinander verbunden sind. Der im wesentlichen ebene, E-förmige Abschnitt 51 dient der doppelt beabstandeten Befestigung an der festen Auflage an derselben Stelle 21a wie das Befestigungsteil 41 (Fig. 2 und 5). Hierfür sind mindestens die drei Schraubenlöcher 52 ausgestanzt. Die unterschiedlichen Längen der Schenkel 51.1, 51.2 und 51.3 von der verbindenden Basis 54 bis zu den Schraubenlöchern 52 ergeben sich durch die verschiedenen Positionen, an denen die Lenkfedern 12 im Abstand von den Blattfedern 11 an der festen Auflage befestigt sein müssen. Im Bereich des Schraubenlochs 52 beginnt die eigentliche Lenkfeder 12.n die sich bis an das Ende der jeweiligen Zunge erstreckt. Anschliessend an das jeweilige Schraubenloch 42 ist das Stanzteil 50 nach unten abgekröpft und entfaltet dadurch im eingespannten Zustand seine vorgespannte Federwirkung. Gegen das äussere Ende der Zunge weist diese ein weiteres Schraubenloch 55 auf, das eine Verschraubung der Lenkfeder 12 mit der zu lenkenden Stütze 31 (Fig. 2) ermöglicht.

Das Beispiel der Figuren 5 und 6 zeigt zwei Stanzteile mit je drei gleichartigen Federn, wobei die Auflage- bzw. Befestigungsstellen im wesentlichen ein gleichseitiges Dreieck bilden. Diese Verteilung ist nicht zwingend. Mit drei Stützen ergibt sich eine definierte Auflage. Je nach Grösse und Gewicht des Wägesystems kann bereits eine Stütze ausreichend sein. Die Anordnung der Stützen und die Stärke der Federn richtet sich nach dem Aufbau und der Gewichtsverteilung innerhalb der Wägezelle. Es sind also auch weniger oder mehr als drei Stützen denkbar, mehr als vier aber kaum sinnvoll.

Die Federkonstante ergibt sich im wesentlichen aus der Art und der Dicke des Blechs sowie der Länge und Breite des Schenkels, die Vorspannung in erster Linie aus dem Kröpfwinkel. Ein Vorteil der Gestaltung der Blattfedern 11 bzw. der Lenkfedern 12 mittels des beschriebenen Stanzteils besteht darin, dass die gewünschte oder benötigte Eigenschaft der Feder durch Wahl der geometrischen Abmessungen auf einfachste Weise bestimmt werden kann.

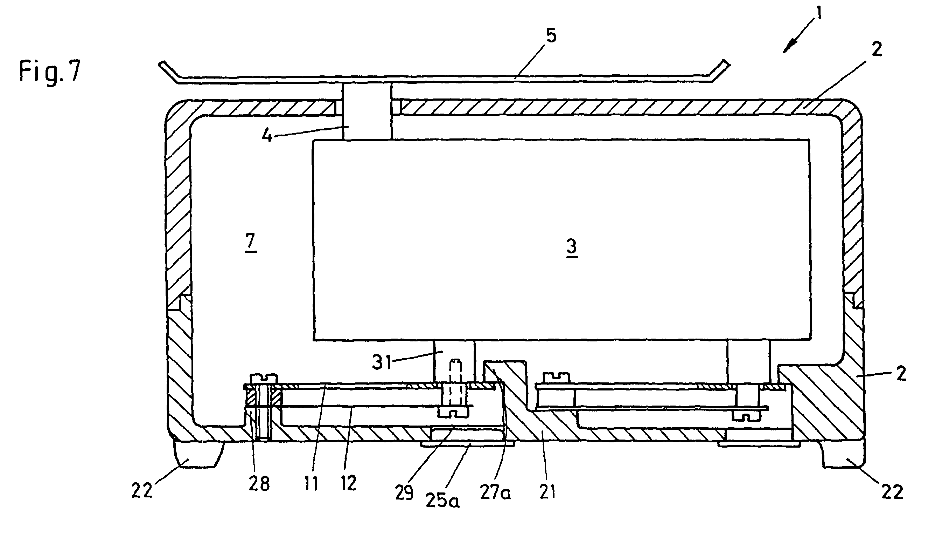

Eine alternative Ausführungsform einer Waage ist in der Figur 7 schematisch dargestellt. Teile gleicher Funktion wie in der in der Figur 1 gezeigten Waage sind mit gleichen Bezugszeichen versehen. Es handelt sich um eine oberschalige Waage 1 ohne geschlossenen Wägeraum. Man erkennt die frei zugängliche Waagschale 5 zur Aufnahme der Last, die über den Lastaufnehmer 4 auf die Wägezelle 3 wirkt. Die Wägezelle 3 samt der Abstützvorrichtung liegt im vom Gehäuse 2 umschlossenen Raum 7, der sich samt der integrierten Abstützvorrichtung sehr niedrig halten lässt. Das Ganze liegt mit Füssen 22 auf einer nicht gezeichneten Unterlage auf. Der Gehäuseboden 21 weist auf der Oberseite Flanschen 28 als Befestigungsstellen für die Fixierung der Blattfedern 11 und der Lenkfedern 12 auf, sowie Anschläge 27a für die Begrenzung der Auslenkung der nach oben vorgespannten Blattfedern 11. Im übrigen handelt es sich um die gleich ausgestaltete Abstützvorrichtung, wie sie anhand der Figur 2 beschrieben ist. Ein Loch im Gehäuseboden 21 wird hier nicht zwingend benötigt, weil die Stütze 31 nicht durch diesen hindurchgeführt ist. Hingegen ist ein solches von Vorteil für die Montage. Das gezeichnete Montageloch 29 lässt sich auf einfache Weise mit einem Pfropf 25a verschliessen.

## Patentansprüche

1. Abstützvorrichtung für eine Wägezelle (3) mit mindestens einer mit der Wägezelle (3) verbundenen und sie tragenden Stütze (31), die auf einer mit einer festen Auflage (21) verbundenen Feder (11) aufliegt und sich mit der Feder (11) entgegen der Federkraft in im wesentlichen lotrechter Richtung gegenüber der festen Auflage (21) verschieben kann, **dadurch gekennzeichnet, dass** die Feder (11) gegen die feste Auflage (21, 27, 27a) mit Kraftwirkung nach oben vorgespannt ist, und dass die Stütze (31) gegenüber der Feder (11) nach oben verschiebbar und an einem an der festen Auflage (21, 28) befestigten Lenker (12) angelenkt ist.

2. Abstützvorrichtung nach Anspruch 1, **dadurch gekennzeichnet, dass** der Lenker (12) als Lenkfeder (12) ausgebildet ist, welche die Stütze (31) zusätzlich zur Schwerkraft auf die Feder (11) drückt.

3. Abstützvorrichtung nach Anspruch 1, **dadurch gekennzeichnet, dass** die Feder (11) als Blattfeder (11) ausgebildet ist.

4. Abstützvorrichtung nach Anspruch 2 und 3, **dadurch gekennzeichnet, dass** die Lenkfeder (12) und die Blattfeder (11) als Paar ausgebildet sind und mit Vorteil parallel verlaufen.

5. Abstützvorrichtung nach Anspruch 4, **dadurch gekennzeichnet, dass** die Stütze (31) als Bolzen mit zwei Abschnitten unterschiedlicher Dicke ausgebildet ist, der mit seinem unteren, schlankeren Abschnitt (31b) durch eine Bohrung (43) in der Blattfeder (11) hindurch zur Lenkfeder (12) reicht, mit der er lösbar verbunden ist, und der mit der Schulter (31c) am Übergang zum dickeren Abschnitt (31a) auf der Blattfeder (11) aufliegt.

6. Abstützvorrichtung nach Anspruch 2 oder 4 für mehr als eine Stütze, **dadurch gekennzeichnet, dass** die Lenkfedern (12.1 ...12.3), an denen die Stützen (31) angelenkt sind, aus einem einzigen Stanzteil (50) geformt sind.

7. Abstützvorrichtung nach Anspruch 3 oder 4 für mehr als eine Stütze, **dadurch gekennzeichnet, dass** die Blattfedern (11), auf denen die Stützen (31) aufliegen, aus einem einzigen Stanzteil (40) geformt sind.

8. Waage (1) mit einem feststehenden Gehäuse (2 ,21), **dadurch gekennzeichnet, dass** sie für die vom Gehäuse (2, 21) umschlossene Wägezelle (3) eine Abstützvorrichtung nach Anspruch 1 aufweist, wobei der Gehäuseboden (21) die feste Auflage (21, 27, 27a) bildet.

9. Waage nach Anspruch 8, **dadurch gekennzeichnet, dass** der feststehende Gehäuseboden (21) im Bereich der Abstützvorrichtung auf höherem Niveau verläuft als in anderen Bereichen und Durchgangslöcher (31) für die Stützen (31) aufweist, und dass Lenker (12) und Federn (11) unterhalb des Gehäusebodens (21) verlaufen und an der Unterseite des Gehäusebodens (21) befestigt sind.

10. Waage nach Anspruch 8, **dadurch gekennzeichnet, dass** Lenker (12) und Federn (11) oberhalb des feststehenden Gehäusebodens (21) verlaufen und der Gehäuseboden (21) im Bereich der Stützen (3) Montagelöcher (29) aufweist.

## Claims

1. Support device for a weighing cell (3) with at least one support post (31) connected to and supporting the weighing cell (3), wherein the support post (31) is resting on a spring (11) that is connected to a stationary support base (21), the support post (31) being movable together with the spring (11) in relation to the stationary support base (21) in a substantially vertical direction against the opposing spring force, **characterized in that** the spring (11) is biased with an upward pre-tensioning force against the stationary support base (21, 27, 27a) and
the support post (31) is upwardly movable from the spring (11) while being constrained by a guide member (12) that is attached to the stationary base (21, 28).

2. Support device according to claim 1, **characterized in that** the guide member (12) is formed as a guide spring (12) which pushes the support post (31) against the spring (11) with an additional force besides the gravity force.

3. Support device according to claim 1, **characterized in that** the spring (11) is configured as a leaf spring (11).

4. Support device according to claims 2 and 3, **characterized in that** the guide spring (12) and the leaf spring (11) are configured as a pair, advantageously extending parallel to each other.

5. Support device according to claim 4, **characterized in that** the support post (31) is configured as a bolt with two sections of different thickness, wherein the lower and thinner section (31b) reaches through a hole (43) in the leaf spring (11) to the guide spring (12) to which the bolt is releasably connected, and wherein the shoulder (31c) of the bolt at the transition to the thicker section (31a) rests on the leaf spring (11).

6. Support device according to claim 2 or 4 configured for more than one support post, **characterized in that** the guide springs (12.1, ... 12.3) by which the support posts (31) are constrained are formed of an integral die-punched part (50).

7. Support device according to claim 3 or 4 configured for more than one support post, **characterized in that** the leaf springs (11) on which the support posts (31) are resting are formed of an integral die-punched part (40).

8. Balance (1) with a stationary housing (2, 21), **characterized in that** the balance comprises a support device according to claim 1 for the weighing cell (3) that is enclosed in the housing (2, 21), wherein the housing floor (21) forms the stationary support base (21, 27, 27a).

9. Balance according to claim 8, **characterized in that** the stationary housing floor (21) in the vicinity of the support device is raised to a higher level than in other areas and has passage holes (31) for the support posts (31), and that guide members (12) and springs (11) are located below the housing floor (21) and are attached to the underside of the housing floor (21).

10. Balance according to claim 8, **characterized in that** guide members (12) and springs (11) are located above the stationary housing floor (21) and that the housing floor (21) has assembly access holes (29) in the area of the support posts (3).

## Revendications

1. Dispositif de soutien pour une cellule de pesée (3) comprenant au moins un support (31) relié à la cellule de pesée (3) et portant celle-ci, qui repose sur un ressort (11) relié à un support (21) fixe et peut être déplacé avec le ressort (11) dans le sens contraire à la force de ressort dans une direction sensiblement verticale par rapport au support (21) fixe, **caractérisé en ce que** le ressort (11) est pré-tendu contre le support (21, 27, 27a) fixe avec l'effet de ressort vers le haut, et **en ce que** le support (31) peut être déplacé par rapport au ressort (11) vers le haut et est articulé sur un système directeur (12) fixé sur le support (21, 28) fixe.

2. Dispositif de soutien selon la revendication 1, **caractérisé en ce que** le système directeur (12) est conçu comme un ressort directeur (12), qui appuie le support (31) en supplément de la force de pesanteur sur le ressort (11).

3. Dispositif de soutien selon la revendication 1, **caractérisé en ce que** le ressort (11) est conçu comme un ressort à lames (11).

4. Dispositif de soutien selon les revendications 2 et 3, **caractérisé en ce que** le ressort directeur (12) et le ressort à lames (11) sont réalisés comme une paire et sont agencés de préférence en parallèle.

5. Dispositif de soutien selon la revendication 4, **caractérisé en ce que** le support (31) est conçu comme un boulon avec deux parties d'épaisseur différente, qui passe avec sa partie (31b) inférieure et plus élancée à travers un alésage (43) dans le ressort à lames (11) vers le ressort directeur (12), avec lequel il est relié de façon amovible et qui repose avec l'épaulement (31c) sur la transition avec la partie (31a) plus épaisse sur le ressort à lames (11).

6. Dispositif de soutien selon la revendication 2 ou 4 pour plus d'un support, **caractérisé en ce que** les ressorts directeurs (12.1 ... 12.3), sur lesquels les supports (31) sont articulés, sont formés d'une pièce découpée (50) unique.

7. Dispositif de soutien selon la revendication 3 ou 4 pour plus d'un support, **caractérisé en ce que** les ressorts à lames (11), sur lesquels les supports (31) reposent, sont formés d'une pièce découpée (40) unique.

8. Balance (1) comprenant un carter (2, 21) fixe, **caractérisé en ce qu'**elle présente un dispositif de soutien selon la revendication 1 pour la cellule de pesée (3) entourée par le carter (2, 21), le fond du carter (21) formant le support (21, 27, 27a) fixe.

9. Balance selon la revendication 8, **caractérisé en ce que** le fond du carter (21) fixe est agencé dans la zone du dispositif de soutien à un niveau plus élevé que dans d'autres zones et présente des trous de passage (31) pour les supports (31) et **en ce que** des systèmes directeurs (12) et des ressorts (11) sont agencés au-dessous du fond du carter (21) et sont fixés sur le côté inférieur du fond du carter (21).

10. Balance selon la revendication 8, **caractérisé en ce que** les systèmes directeurs (12) et les ressorts (11) sont agencés au-dessus du fond du carter (21) fixe et le fond du carter (21) présente des trous de montage (29) dans la zone des supports (3).
